# EUROPEAN PATENT SPECIFICATION

(11) **EP 2 239 295 B1**
(45) Date of publication and mention of the grant of the patent: **03.07.2019**
(21) Application number: 10250687.0
(22) Date of filing: 31.03.2010
(51) Int. Cl.: C08K 5/521, C08L 83/06

(54) **Radiation-curable silicone composition**
Strahlenhärtbare Silikonzusammensetzung
Composition de silicone durcissable par radiation

(30) Priority: 06.04.2009 JP 2009091953
(43) Date of publication of application: 13.10.2010
(73) Proprietor: Shin-Etsu Chemical Co., Ltd., Tokyo (JP)
(72) Inventor: Tanaka. Kenji, Annaka-shi Gunma-ken (JP); Irifune, Shinji, Annaka-shi Gunma-ken (JP)
(74) Representative: Mewburn Ellis LLP

(56) References cited:
- EP-A1- 1 752 463
- EP-A1- 1 953 139
- WO-A1-2005/044920
- JP-A- 2007 262 401
- US-A- 5 037 861
- CRIVELLO, J. V., LEE, J. L.: "The synthesis, characterization, and photoinitiated cationic polymerization of silicon-containing epoxy resins", JOURNAL OF POLYMER SCIENCE PART A: POLYMER CHEMISTRY, vol. 28, no. 3, 28 February 1990 (1990-02-28), pages 479-503, John Wiley & Sons, Inc. DOI: 10.1002/pola.1990.080280303

## Description

### TECHNICAL FIELD

This invention relates to radiation-curable silicone compositions which meet both cure and safety requirements.

### BACKGROUND

A variety of means are known for curing silicone compositions including condensation reaction by organometallic compounds, vulcanization by organic peroxides, and hydrosilylation reaction by platinum group metal catalysts. These curing systems require the heating step which is low in energy efficiency. There exists a need for a curing system having a higher energy efficiency in order to improve productivity and to comply with the recent energy saving demand against the global greenhouse effect. For this and other reasons, attention is now paid to the radiation-assisted curing system. Among others, one curing system uses a compound capable of generating an acid upon exposure to radiation (known as acid generator) to effect cation polymerization through ring-opening of epoxy groups. This system finds an expanding application since it is free of cure inhibition by oxygen, convenient and easy to handle as compared with the conventional radical polymerization system using acrylic groups. A number of acid generators are known as being effective for cation polymerization as described in JP-B S52-014278 and JP-A S50-158680. Most often, zwitterions having an electric charge within the molecule are utilized. As the anion moiety of the photoacid generator, BF₄⁻, PF₆⁻, AsF₆⁻ and SbF₆⁻ are often utilized. It is known that reactivity generally increases in the order of BF₄⁻ < PF₆⁻ < AsF₆⁻ < SbF₆⁻. Although SbF₆⁻ and AsF₆⁻ have high reactivity, their application is limited because of toxicity.

If a compound which is free of antimony or arsenic, but has an equivalent acid generating ability to the antimony and arsenic compounds is available as the photoacid generator, a silicone composition comprising the same may be safe and find a wider range of application. There exists a need for such photoacid generators.

### Citation List

Patent Document 1: JP-B S52-014278
Patent Document 2: JP-A S50-158680

EP 1752463 A1 proposes cationic polymerisation initiators containing fluorinated alkyl fluorophosphoric acid salts of onium and transition metal complex, and further proposes curable compositions containing these and cured materials thereof. This document proposes that examples of cationically polymerizable compounds may include epoxides, and refers to CRIVELLO, J.V., LEE, J.L.:"The synthesis, characterization, and photoinitiated cationic polymerizatoin of silicon-containing epoxy resins", JOURNAL OR POLYMER SCIENCE PART A: POLYMER CHEMISTRY, vol. 28, no.3, 28 February 1990 (1990-02-28), pages 479-503, John Wiley & Sons, Inc. as describing multifunctional epoxides having a dimethylsiloxane skeleton.

An aim herein is to provide new and useful radiation-curable silicone compositions which meet both curability and safety requirements at a good level, methods of preparation and use of such compositions, and articles made from or comprising the cured compositions.

The inventors have found that when an organopolysiloxane having an epoxy group is combined with a fluoroalkylfluorophosphoric acid salt as a photoacid generator, the resulting silicone composition is not only curable because this photoacid generator exhibits a curability equivalent to that of an antimony base photoacid generator having a high acid generating ability, but is also safe because it is free of antimony and other toxic substances. The photoacid generator, fluoroalkylfluorophosphoric acid salt is more effective when the fluoroalkyl group bonded to the phosphorus atom in the anion moiety has a fluorine substitution of at least 80 mol%.

The invention provides a radiation-curable silicone composition as set out in claim 1.

In a preferred embodiment, component (B) is a fluoroalkylfluorophosphoric acid salt of formula (2) wherein A is sulfur or iodine and B is sulfur.

At the polymerizing terminus of cation polymerization, there are present an oxonium cation and an anion of the onium salt or photoacid generator. Because the anion moiety has a bulky structure that phosphorus atom has fluoroalkyl groups substituted thereon, the salt provides a longer ionic bond length to the oxonium ion and a higher polymerization activity, exhibiting equivalent curability to that of conventional antimony compounds.

### ADVANTAGEOUS EFFECTS

Radiation-curable silicone compositions comprising fluoroalkylfluorophosphoric acid salt as photoacid generator as proposed are found to be readily curable on exposure to radiation and cure into silicone products which are useful in industry. Such compositions can be fully safe, being desirably free of antimony compounds and other toxic substances. They are useful as optical materials other uses are disclosed later.

### FURTHER EXPLANATIONS; OPTIONS AND PREFERENCES

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

As used herein, the terminology "(Cₓ-C_{y})", as applied to a particular unit, such as, for example, a chemical compound or a chemical substituent group, means having a carbon atom content of from "x" carbon atoms to "y" carbon atoms per such unit.

The radiation-curable silicone composition of the invention is defined as comprising components (A) and (B), which are described below in detail.

Component (A) is a cation-polymerizable organopolysiloxane containing an epoxy group, which has the average compositional formula (1):

R¹ₐR²_{b}SiO_{(4-a-b)/2} (1)

wherein R¹ is a substituted or unsubstituted monovalent C₁-C₁₀ hydrocarbon group, R² is an epoxy-containing organic group, a and b are numbers in the range: a > 0, b > 0, and 0 < a+b ≤ 3.

Specifically, R¹ is selected from substituted or unsubstituted monovalent C₁-C₁₀ hydrocarbon groups, for example, alkyl groups such as methyl, ethyl, propyl and butyl, cycloalkyl groups such as cyclohexyl, aryl groups such as phenyl and tolyl, and substituted forms of the foregoing groups in which some or all hydrogen atoms attached to carbon atoms are substituted by hydroxy, cyano or halogen, such as hydroxypropyl, cyanoethyl, 1-chloropropyl, and 3,3,3-trifluoropropyl. Desirably, at least 80 mol% of R¹ are alkyl, especially methyl.

R² is an epoxy-containing organic group. Preferably R² is selected from cation-polymerizable epoxy functional groups of the following structure. 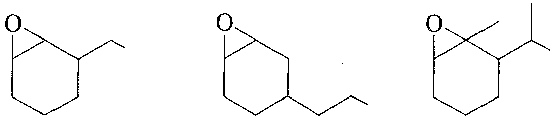 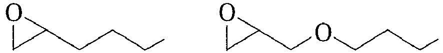 The present invention uses cation-polymerizable organopolysiloxanes in which 1 to 25 mol% of the entire organic groups are monovalent epoxy-functional organic groups. If the proportion of epoxy-functional groups is less than 1 mol%, then the cure rate may be retarded, leading to undercure. If the proportion of epoxy-functional groups is more than 35 mol%, then synthesis of such a compound may be difficult.

The organopolysiloxane preferably has a viscosity at 25°C of up to 1,000,000 mPa-s, and more preferably up to 100,000 mPa-s. With a viscosity of more than 1,000,000 mPa-s, the composition may become too viscous to handle. Also preferably the organopolysiloxane has a viscosity of at least 1 mPa-s at 25°C. It is noted that the viscosity is measured by a rotational viscometer.

An amount of the cation-polymerizable organopolysiloxane (A) used is 100 parts by weight, on the basis of which blending ratios of other components are adjusted.

Component (B) is a cation polymerization initiator which is a fluoroalkylfluorophosphoric acid salt having the general formula (2).

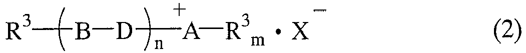

Herein A is an m-valent atom of Group 16 or 17 in the Periodic Table, which ties with organic groups R³ and D to form an onium [A⁺]. Of the m-valent atoms of Group 16 or 17, preferred are sulfur (S), iodine (I), and selenium (Se) having a high ability to initiate cation polymerization. More preferred are S and I. The subscript m indicative of the valence of A is 1 or 2.

B is a divalent atom of Group 16 in the Periodic Table. Of the divalent atoms of Group 16, preferred are sulfur (S) and selenium (Se) having a high ability to initiate cation polymerization. More preferred is S.

R³ are organic groups tying with A and B and each independently a C₆-C₃₀ aryl group, C₄-C₃₀ monovalent heterocyclic group, or C₁-C₃₀ alkyl group, which may have at least one substituent selected from the group consisting of alkyl, hydroxy, alkoxy, alkylcarbonyl, arylcarbonyl, alkoxycarbonyl, aryloxycarbonyl, acyloxy, arylthio, alkylthio, alkylsulfinyl, alkylsulfonyl, aryl, aryloxy, amino, cyano, nitro, and halogen. The number of R³ is m+1 while R³ may be the same or different. Alternatively, two or more R³ may bond with A directly or via -O-, -S-, -SO-, -SO₂-, -NH-, -NR⁴-, -CO-, -COO-, -CONH-, C₁-C₃ alkylene, or phenylene, to form an A-containing ring structure. R⁴ is a C₁-C₅ alkyl group or C₆-C₁₀ aryl group. Examples of the C₁-C₅ alkyl group include straight alkyl groups such as methyl, ethyl, propyl, butyl and pentyl, branched alkyl groups such as isopropyl, isobutyl, sec-butyl, tert-butyl, isopentyl, neopentyl, and tert-pentyl, and cycloalkyl groups such as cyclopropyl, cyclobutyl, and cyclopentyl, and examples of the C₆-C₁₀ aryl group include phenyl and naphthyl. Examples of the C₁-C₃ alkylene group include straight or branched alkylene groups such as methylene, ethylene, and propylene.

Examples of the C₆-C₃₀ aryl group represented by R³ include monocyclic aryl groups such as phenyl and fused polycyclic aryl groups such as naphthyl, anthracenyl, phenanthrenyl, pyrenyl, chrysenyl, naphthacenyl, benzanthracenyl, anthraquinolyl, fluorenyl, and naphthoquinolyl.

Suitable C₄-C₃₀ monovalent heterocyclic groups are cyclic groups containing one to three heteroatoms such as oxygen, nitrogen and sulfur and may be the same or different. Examples include monocyclic heterocyclic groups such as thienyl, furanyl, pyranyl, pyrrolyl, oxazolyl, thiazolyl, pyridyl, pyrimidyl, and pyradinyl, and fused polycyclic heterocyclic groups such as indolyl, benzofuranyl, isobenzofuranyl, benzothienyl, isobenzothienyl, quinolyl, isoquinolyl, quinoxalinyl, quinazolinyl, carbazolyl, acrizinyl, phenothiazinyl, phenazinyl, xanthenyl, thianthrenyl, phenoxadinyl, phenoxathinyl, chromanyl, isochromanyl, dibenzothienyl, xanthonyl, thioxanthonyl, and dibenzofuranyl.

Examples of the C₁-C₃₀ alkyl group include straight alkyl groups such as methyl, ethyl, propyl, butyl, pentyl, octyl, decyl, dodecyl, tetradecyl, hexadecyl, and octadecyl; branched alkyl groups such as isopropyl, isobutyl, sec-butyl, tert-butyl, isopentyl, neopentyl, tert-pentyl, and isohexyl; and cycloalkyl groups such as cyclopropyl, cyclobutyl, cyclopentyl, and cyclohexyl.

The C₆-C₃₀ aryl group, C₄-C₃₀ monovalent heterocyclic group, and C₁-C₃₀ alkyl group, represented by R³, may have at least one substituent. Suitable substituents include C₁-C₁₈ straight or branched alkyl groups such as methyl, ethyl, propyl, isopropyl, butyl, sec-butyl, tert-butyl, pentyl, neopentyl, octyl, decyl, dodecyl, tetradecyl, hexadecyl, and octadecyl; C₃-C₁₈ cycloalkyl groups such as cyclopropyl, cyclobutyl, cyclopentyl, and cyclohexyl; hydroxy groups; C₆-C₂₀ arylthio groups such as phenylthio, 4-methylphenylthio, 4-chlorophenylthio, 4-bromophenylthio, 4-fluorophenylthio, 4-methoxyphenylthio, 4-[4-(phenylthio)benzoyl]phenylthio, 4-[4-(phenylthio)phenoxy]phenylthio, 4-[4-(phenylthio)phenyl]phenylthio, 4-(phenylthio)phenylthio, and 4-benzoylphenylthio; C₁-C₁₈ straight or branched alkylthio groups such as methylthio, ethylthio, isopropylthio, isobutylthio, sec-butylthio, tert-butylthio, isopentylthio, neopentylthio, tert-pentylthio, decylthio, and dodecylthio; C₁-C₁₈ straight or branched alkylsulfinyl groups such as methylsulfinyl, ethylsulfinyl, propylsulfinyl, isopropylsulfinyl, butylsulfinyl, isobutylsulfinyl, sec-butylsulfinyl, tert-butylsulfinyl, pentylsulfinyl, isopentylsulfinyl, neopentylsulfinyl, tert-pentylsulfinyl, and octylsulfinyl; C₁-C₁₈ straight or branched alkylsulfonyl groups such as methylsulfonyl, ethylsulfonyl, propylsulfonyl, isopropylsulfonyl, butylsulfonyl, isobutylsulfonyl, sec-butylsulfonyl, tert-butylsulfonyl, pentylsulfonyl, isopentylsulfonyl, neopentylsulfonyl, tert-pentylsulfonyl, and octylsulfonyl; amino groups, cyano groups, nitro groups, and halogen atoms such as fluorine, chlorine, bromine and iodine.

Two or more R³ may bond with A directly or via -O-, -S-, -SO-, -SO₂-, -NH-, -NR⁴-, -CO-, -COO-, -CONH-, C₁-C₃ alkylene, or phenylene, to form an A-containing ring structure, wherein R⁴ is as defined above. Exemplary A-containing ring structures are given below. 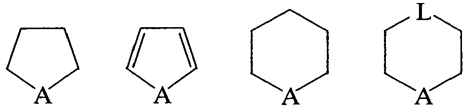 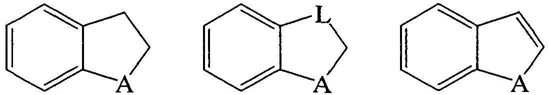 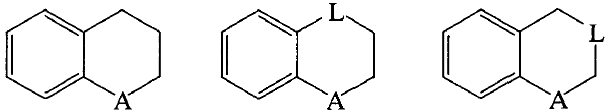 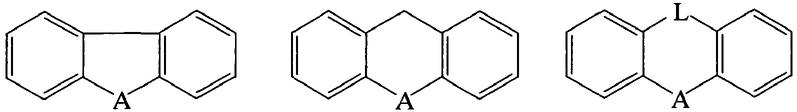 Herein A is an m-valent atom of Group 16 or 17 in the Periodic Table, and L is -O-, -S-, -SO-, -SO₂-, -NH-, -NR⁴-, -CO-, -COO-, -CONH-, C₁-C₃ alkylene, or phenylene, wherein R⁴ is as defined above.

In formula (2), the number (m+1) of R³ which tie with m-valent atom A and divalent atom B may be the same or different. Preferably at least one of R³, more preferably all of R³ are C₆-C₃₀ aryl groups or C₄-C₃₀ monovalent heterocyclic groups which may have one or more substitutes as mentioned above.

In formula (2), D is a group of the structure having the general formula (3).

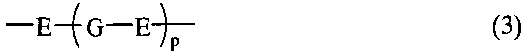

In formula (3), E is each independently a C₁-C₈ alkylene group, C₆-C₂₀ arylene group, or divalent C₈-C₂₀ heterocyclic group, which may have at least one substituent selected from the group consisting of C₁-C₈ alkyl, C₁-C₈ alkoxy, C₆-C₁₀ aryl, hydroxy, cyano, nitro, and halogen.

Examples of E include straight, branched or cyclic C₁-C₈ alkylene groups such as methylene, ethylene and propylene; C₆-C₂₀ arylene groups such as phenylene, xylylene, naphthylene, biphenylene, and anthracenylene; and divalent C₈-C₂₀ heterocyclic groups such as dibenzofurandiyl, dibenzothiphenediyl, xanthenediyl, phenoxathinediyl, thianthrenediyl, bithiophenediyl, bifurandiyl, thioxanthonediyl, xanthonediyl, carbazolediyl, acridinediyl, phenothiazinediyl, and phenazinediyl. As used herein, the term "divalent heterocyclic groups" refer to divalent groups derived from heterocyclic compounds by eliminating one hydrogen atom from each of two different annular carbon atoms.

The alkylene group, arylene group, and divalent heterocyclic group, represented by E, may have at least one substituent. Suitable substituents include C₁-C₈ straight alkyl groups such as methyl, ethyl, propyl, butyl, pentyl, and octyl; C₁-C₈ branched alkyl groups such as isopropyl, isobutyl, sec-butyl, and tert-butyl; C₃-C₈ cycloalkyl groups such as cyclopropyl and cyclohexyl; C₁-C₈ alkoxy groups such as methoxy, ethoxy, propoxy, butoxy, and hexyloxy; C₆-C₁₀ aryl groups such as phenyl and naphthyl; hydroxyl groups, cyano groups, nitro groups, and halogen atoms such as fluorine, chlorine, bromine and iodine.

In formula (3), G is independently -O-, -S-, -SO-, -SO₂-, -NH-, -NR⁴-, -CO-, -COO-, -CONH-, C₁-C₃ alkylene or phenylene, wherein R⁴ is as defined above. Suitable C₁-C₃ alkylene groups are straight or branched alkylene groups such as methylene, ethylene, and propylene. In formula (3), p is an integer of 0 to 5, the number (p+1) of E and the number p of G each may be the same or different.

Preferred examples of the groups represented by D are given below.

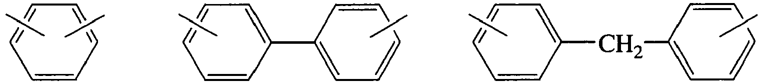

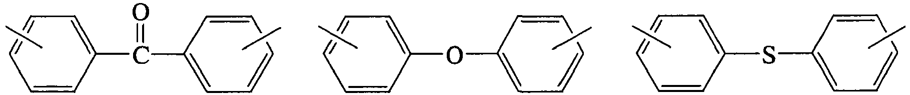

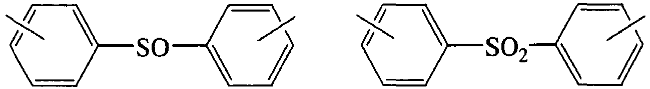

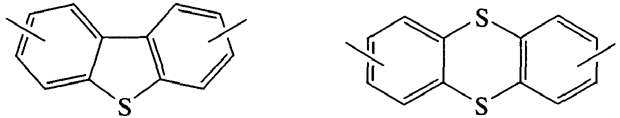

In formula (2), n which denotes the number of recurring units: [B-D] linkages is an integer of 0 to 3, preferably 0 or 1.

Preferred onium ions in formula (2) are sulfonium ions and iodonium ions. Preferred examples include sulfonium ions such as triphenylsulfonium, tri-p-tolylsulfonium, 4-(phenylthio)phenyldiphenylsulfonium, bis[4-(diphenylsulfonio)phenyl]sulfide, bis[4-{bis[4-(2-hydroxyethoxy)phenyl]sulfonio}phenyl]sulfide, bis{4-[bis(4-fluorophenyl)sulfonio]phenyl}sulfide, 4-(4-benzoyl-2-chlorophenylthio)phenylbis(4-fluorophenyl)-sulfonium, 4-(4-benzoylphenylthio)phenyldiphenylsulfonium, 7-isopropyl-9-oxo-10-thia-9,10-dihydroanthracen-2-yldi-p-tolylsulfonium, 7-isopropyl-9-oxo-10-thia-9,10-dihydroanthracen-2-yldiphenyl-sulfonium, 2-[(di-p-tolyl)sulfonio]thioxanthone, 2-[(diphenyl)sulfonio]thioxanthone, 4-[4-(4-tert-butylbenzoyl)phenylthio]phenyldi-p-tolylsulfonium, 4-[4-(benzoylphenylthio)]phenyldiphenylsulfonium, 5-(4-methoxyphenyl)thianthrenium, 5-phenylthianthrenium, diphenylphenacylsulfonium, 4-hydroxyphenylmethylbenzylsulfonium, 2-naphthylmethyl(1-ethoxycarbonyl)ethylsulfonium, 4-hydroxyphenylmethylphenacylsulfonium, and octadecylmethylphenacylsulfonium; and iodonium ions such as diphenyliodonium, di-p-tolyliodonium, bis(4-dodecylphenyl)iodonium, bis(4-methoxyphenyl)iodonium, (4-octyloxyphenyl)phenyliodonium, bis(4-decyloxy)phenyliodonium, 4-(2-hydroxytetradecyloxy)phenylphenyliodonium, 4-isopropylphenyl(p-tolyl)iodonium, and 4-isobutylphenyl(p-tolyl)iodonium.

In formula (2) representative of the fluoroalkylfluorophosphoric acid salt, X⁻ is an anion counter to the onium ion in formula (2). Specifically X⁻ is a fluoroalkylfluorophosphate anion of the general formula (4).

[(Rf)_{q}PF_{6-q}]⁻ (4)

In formula (2), the number of X⁻ or anion is one per molecule.

In formula (4), Rf is a fluorine-substituted alkyl group, preferably of 1 to 8 carbon atom, more preferably 1 to 4 carbon atoms. Exemplary alkyl groups include straight alkyl groups such as methyl, ethyl, propyl, butyl, pentyl and octyl, branched alkyl groups such as isopropyl, isobutyl, sec-butyl and tert-butyl; and cycloalkyl groups such as cyclopropyl, cyclobutyl, cyclopentyl and cyclohexyl. The percent fluorine substitution at which hydrogen atoms on the alkyl group are substituted by fluorine atoms is generally at least 80 mol%, preferably at least 90 mol%, and more preferably 100 mol%. If the percent fluorine substitution is less than 80 mol%, then the onium salt has a low cation polymerization initiating ability.

More preferably Rf is a straight or branched perfluroalkyl group of 1 to 4 carbon atoms having a percent fluorine substitution of 100%, for example, CF₃, CF₃CF₂, (CF₃)₂CF, CF₃CF₂CF₂, CF₃CF₂CF₂CF₂, (CF₃)₂CFCF₂, CF₃CF₂(CF₃)CF, or (CF₃)₃C.

In formula (4), q indicative of the number of Rf is an integer of 1 to 5, preferably 2 to 4, and more preferably 2 or 3. The number q of Rf may be the same or different. Preferred examples of the fluoroalkylfluorophosphate anion of formula (4) are given below. [(CF₃CF₂)₂PF₄]⁻, [(CF₃CF₂)₃PF₃]⁻, [((CF₃)₂CF)₂PF₄]⁻, [((CF₃)₂CF)₃PF₃]⁻, [(CF₃CF₂CF₂)₂PF₄]⁻, [(CF₃CF₂CF₂)₃PF₃]⁻, [((CF₃)₂CFCF₂)₂PF₄]⁻, [((CF₃)₂CFCF₂)₃PF₃]⁻, [(CF₃CF₂CF₂CF₂)₂PF₄]⁻ and [(CF₃CF₂CF₂CF₂)₃PF₃]⁻. Of these, preference is given to [(CF₃CF₂)₃PF₃]⁻, [(CF₃CF₂CF₂)₃PF₃]⁻, [((CF₃)₂CF)₃PF₃]⁻, [((CF₃)₂CF)₂PF₄]⁻, [((CF₃)₂CFCF₂)₃PF₃]⁻, and [((CF₃)₂CFCF₂)₂PF₄]⁻.

To facilitate dissolution in the cation-polymerizable organopolysiloxane, the fluoroalkylfluorophosphoric acid salt of formula (2) may be previously dissolved in a solvent which does not interfere with cation polymerization. Suitable solvents include carbonates such as propylene carbonate, ethylene carbonate, 1,2-butylene carbonate, dimethyl carbonate, and diethyl carbonate; esters such as ethyl acetate, ethyl lactate, β-propiolactone, β-butyrolactone, γ-butyrolactone, δ-valerolactone, and ε-caprolactone; glycols such as ethylene glycol, propylene glycol, diethylene glycol, dipropylene glycol, triethylene glycol, and tripropylene glycol; monoalkyl ethers such as monomethyl ether, monoethyl ether, monobutyl ether; dialkyl ethers such as dimethyl ether, diethyl ether, dibutyl ether; and acetic acid esters of the foregoing monoalkyl ethers. The amount of the solvent, when used, is preferably 15 to 1,000 parts by weight, more preferably 30 to 500 parts by weight relative to 100 parts by weight of the fluoroalkylfluorophosphoric acid salt.

The amount of component (B) or fluoroalkylfluorophosphoric acid salt used is generally 0.05 to 20 parts by weight, preferably 0.1 to 10 parts by weight relative to 100 parts by weight of component (A) or cation-polymerizable organopolysiloxane. An appropriate proportion may be determined while taking into account the properties of the cation-polymerizable compound, the type and dosage of energy radiation, temperature, curing time, humidity, coating thickness and other factors. If the amount of the fluoroalkylfluorophosphoric acid salt used is less than 0.05 parts by weight, the cation-polymerizable organopolysiloxane polymerizes short. If the amount of the fluoroalkylfluorophosphoric acid salt is more than 20 parts by weight, the properties of the cured product are adversely affected by the unreacted cation polymerization initiator and decomposition products thereof.

The curable silicone composition may be obtained by blending components (A) and (B) in the predetermined amounts while various additives, for example, photosensitizers such as anthracene, naphthalene, ketone, carbazole, chrysene, and phenanthrene derivatives, pigments, fillers, antistatic agents, flame retardants, defoamers, flow control agents, photostabilizers, solvents, non-reactive resins and radical polymerizable compounds may be used as optional components. Such optional components may be added in standard amounts as long as the objects of the invention are not compromised.

The curable silicone composition may be cured by irradiating actinic energy radiation. The actinic energy radiation used herein is not particularly limited as long as it has sufficient energy to induce decomposition of component (B) or fluoroalkylfluorophosphoric acid salt. Preferably energy radiation in the ultraviolet to visible region (about 100 nm to about 800 nm) is used which is available from low, medium, high and ultra-high pressure mercury lamps, metal halide lamps, xenon lamps, carbon arc lamps, fluorescent lamps, semiconductor solid lasers, argon laser, He-Cd laser, KrF excimer laser, ArF excimer laser, and F₂ laser. High-energy radiation such as electron beam and x-ray may also be used. The duration of irradiating energy radiation is generally about 0.1 to 10 seconds at room temperature although the duration may be longer in the case of a low transmittance of energy radiation or a thick coating of the curable silicone composition. After irradiation of energy radiation, post-curing may be done by heating at room temperature to 150°C for several seconds to several hours, if necessary.

The curable silicone compositions find application in paint, ink, coating agent, positive resist, resist film, liquid resist, photosensitive material, adhesive, release paper, molding material, casting material, putty, glass fiber impregnant, filler, sealant, encapsulant, and streolithography material.

### EXAMPLE

Examples of the invention are given below by way of illustration and not by way of limitation. In structural formulae, Ep stands for an epoxy functional group of the following formula.

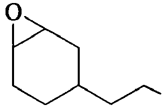

### Cure of radiation-curable silicone composition

Once a radiation-curable silicone composition was prepared, it was applied onto a polyethylene laminated wood-free paper in a coating weight of about 0.7 g/m² by roll coating. Under two high-pressure mercury lamps of 80 W/cm, the coating was irradiated with UV in a dosage of 50 mJ/cm², forming a cured coating. The cured coating was examined for cure by finger touch, and rated good (○) when the overall composition had cured, mediocre (Δ) when the overall composition was curing, and poor (×) when the overall composition was uncured.

### Duty to label toxicity

The photoacid generator in the silicone composition is labeled "Toxic" if it is subject to the duty to label toxicity according to the Poisonous and Deleterious Substances Control Law of Japan and "No" if it has no duty to label toxicity.

### Example 1

A radiation-curable silicone composition #1 was prepared by intimately mixing 100 parts by weight of (a) a cation-polymerizable organopolysiloxane having the average compositional formula (a): 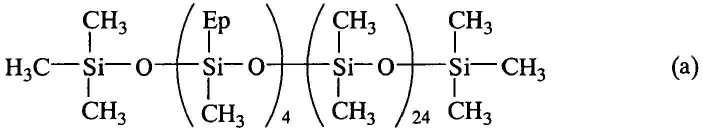 in which 6.5 mol% of the entire organic groups are monovalent epoxy-functional organic groups, having a viscosity of 90 mPa-s at 25°C, as component (A), with 1.84 parts by weight of (e) a 50 wt% propylene carbonate solution of a photoacid generator, 4-(phenylthio)phenyldiphenylsulfonium tris(pentafluoroethyl)trifluorophosphate as component (B). This radiation-curable silicone composition #1 was cured by the above-mentioned procedure and examined for cure, with the result shown in Table 1. The duty to label toxicity of photoacid generator (e) is also shown in Table 1.

### Example 2

A radiation-curable silicone composition #2 was prepared by intimately mixing 100 parts by weight of (d) a mixture of cation-polymerizable organopolysiloxanes having the average compositional formulae (b) and (c): 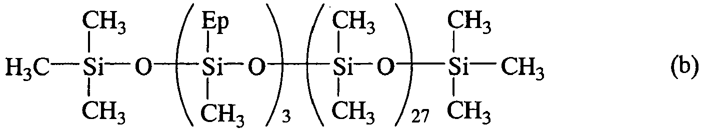 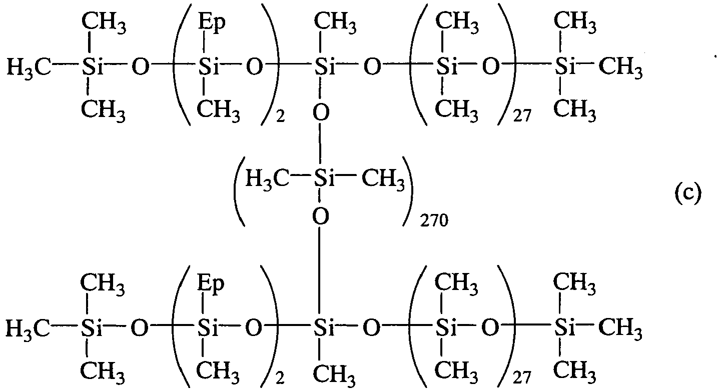 in which 3.7 mol% of the entire organic groups are monovalent epoxy-functional organic groups, having a viscosity of 150 mPa-s at 25°C, as component (A) with 1.84 parts by weight of (e) a 50 wt% propylene carbonate solution of a photoacid generator, 4-(phenylthio)phenyldiphenylsulfonium tris(pentafluoroethyl)trifluorophosphate as component (B). This radiation-curable silicone composition #2 was cured by the above-mentioned procedure and examined for cure, with the result shown in Table 1. The duty to label toxicity of photoacid generator (e) is also shown in Table 1.

### Example 3

A radiation-curable silicone composition #3 was prepared by intimately mixing 100 parts by weight of (a) the organopolysiloxane used in Example 1 as component (A) with 1.84 parts by weight of (f) a 50 wt% propylene carbonate solution of a photoacid generator, 4-(phenylthio)phenyl-diphenylsulfonium tris(heptafluoropropyl)trifluorophosphate as component (B). This radiation-curable silicone composition #3 was cured by the above-mentioned procedure and examined for cure, with the result shown in Table 1. The duty to label toxicity of photoacid generator (f) is also shown in Table 1.

### Example 4

A radiation-curable silicone composition #4 was prepared by intimately mixing 100 parts by weight of (d) the organopolysiloxane mixture used in Example 2 as component (A) with 1.84 parts by weight of (f) a 50 wt% propylene carbonate solution of a photoacid generator, 4-(phenylthio)phenyl-diphenylsulfonium tris(heptafluoropropyl)trifluorophosphate as component (B). This radiation-curable silicone composition #4 was cured by the above-mentioned procedure and examined for cure, with the result shown in Table 1. The duty to label toxicity of photoacid generator (f) is also shown in Table 1.

### Comparative Example 1

A silicone composition #5 was prepared by intimately mixing 100 parts by weight of (a) the organopolysiloxane used in Example 1 with 1.0 part by weight of (g) a 92 wt% propylene carbonate solution of bis-[4-n-(C₁₀-C₁₃)alkylphenyl]iodonium hexafluoroantimonate. This silicone composition #5 was cured by the above-mentioned procedure and examined for cure, with the result shown in Table 1. The duty to label toxicity of photoacid generator (g) is also shown in Table 1.

### Comparative Example 2

A silicone composition #6 was prepared by intimately mixing 100 parts by weight of (d) the organopolysiloxane mixture used in Example 2 with 1.0 part by weight of (g) a 92 wt% propylene carbonate solution of bis-[4-n-(C₁₀-C₁₃)alkylphenyl]iodonium hexafluoroantimonate. This silicone composition #6 was cured by the above-mentioned procedure and examined for cure, with the result shown in Table 1. The duty to label toxicity of photoacid generator (g) is also shown in Table 1.

### Comparative Example 3

A silicone composition #7 was prepared by intimately mixing 100 parts by weight of (a) the organopolysiloxane used in Example 1 with 1.84 parts by weight of (h) a 50 wt% propylene carbonate solution of bis[(C₁₀-C₁₃)alkylphenyl]-iodonium hexafluorophosphate. This silicone composition #7 was cured by the above-mentioned procedure and examined for cure, with the result shown in Table 1. The duty to label toxicity of photoacid generator (h) is also shown in Table 1.

### Comparative Example 4

A silicone composition #8 was prepared by intimately mixing 100 parts by weight of (d) the organopolysiloxane mixture used in Example 2 with 1.84 parts by weight of (h) a 50 wt% propylene carbonate solution of bis[(C₁₀-C₁₃)alkylphenyl]iodonium hexafluorophosphate. This silicone composition #8 was cured by the above-mentioned procedure and examined for cure, with the result shown in Table 1. The duty to label toxicity of photoacid generator (h) is also shown in Table 1.

**Table 1**

| | Composition (pbw) | | | | | | Cure | Duty to label toxicity |
|---|---|---|---|---|---|---|---|---|
| | Cation-polymerizable organopolysiloxane | | Photoacid generator*¹ | | | | | |
| | (a) | (d) | (e) | (f) | (g) | (h) | | |
| Example 1 | 100 | | 0.92 | | | | ○ | No |
| Example 2 | | 100 | 0.92 | | | | ○ | No |
| Example 3 | 100 | | | 0.92 | | | ○ | No |
| Example 4 | | 100 | | 0.92 | | | ○ | No |
| Comparative Example 1 | 100 | | | | 0.92 | | ○ | Toxic |
| Comparative Example 2 | | 100 | | | 0.92 | | ○ | Toxic |
| Comparative Example 3 | 100 | | | | | 0.92 | × | No |
| Comparative Example 4 | | 100 | | | | 0.92 | × | No |

| | | | | | | | | |
|---|---|---|---|---|---|---|---|---|
| *1: parts by weight of solids of photoacid generator | | | | | | | | |

### Note

In respect of numerical ranges disclosed in the present description it will of course be understood that in the normal way the technical criterion for the upper limit is different from the technical criterion for the lower limit, i.e. the upper and lower limits are intrinsically distinct proposals.

## Claims

1. A radiation-curable silicone composition comprising
(A) 100 parts by weight of a cation-polymerizable organopolysiloxane containing an epoxy group and having the average compositional formula (1):
R¹ₐR²_{b}SiO_{(4-a-b)/2} (1)
wherein R¹ is a substituted or unsubstituted monovalent C₁-C₁₀ hydrocarbon group, R² is an epoxy-containing organic group, a and b are numbers in the range: a > 0, b > 0, and 0 < a+b ≤ 3, and wherein 1 to 25 mol% of the entire organic groups in component (A) are monovalent epoxy-functional organic groups,
(B) 0.05 to 20 parts by weight of a fluoroalkylfluorophosphoric acid salt having the general formula (2): 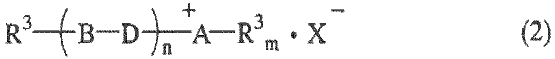
wherein A is an m-valent atom of Group 16 or 17 in the Periodic Table,
B is a divalent atom of Group 16 in the Periodic Table,
m is 1 or 2,
n is an integer of 0 to 3,
R³ is each independently a C₆-C₃₀ aryl group, C₄-C₃₀ monovalent heterocyclic group, or C₁-C₃₀ alkyl group, which may have at least one substituent selected from the group consisting of alkyl, hydroxy, alkoxy, alkylcarbonyl, arylcarbonyl, alkoxycarbonyl, aryloxycarbonyl, acyloxy, arylthio, alkylthio, alkylsulfinyl, alkylsulfonyl, aryl, aryloxy, amino, cyano, nitro, and halogen, or at least two R³ may bond with A directly or via -O-, -S-, -SO-, -SO₂-, -NH-, -NR⁴-, -CO-, -COO-, -CONH-, C₁-C₃ alkylene, or phenylene, to form an A-containing ring structure, R⁴ is a C₁-C₅ alkyl group or C₆-C₁₀ aryl group,
D has a general formula (3): 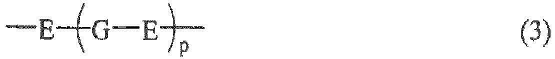 wherein E is each independently a C₁-C₈ alkylene group, C₆-C₂₀ arylene group, or divalent C₈-C₂₀ heterocyclic group, which may have at least one substituent selected from the group consisting of C₁-C₈ alkyl, C₁-C₈ alkoxy, C₆-C₁₀ aryl, hydroxy, cyano, nitro, and halogen, G is independently -O-, -S-, -SO-, -SO₂-, -NH-, -NR⁴-, -CO-, -COO-, -CONH-, C₁-C₃ alkylene or phenylene, R⁴ is as defined above, and p is an integer of 0 to 5, and
X⁻ which is an anion counter to the onium ion in formula (2) is a fluoroalkylfluorophosphate anion of the general formula (4):
[(Rf)_{q}PF_{6-q}]⁻ (4)
wherein Rf is independently a C₁-C₈ alkyl group in which at least 80 mol% of hydrogen atoms are substituted by fluorine atoms, q is an integer of 1 to 5, the number q of Rf's may be the same or different.

2. The composition of claim 1 wherein component (B) is a fluoroalkylfluorophosphoric acid salt of formula (2) wherein A is sulphur or iodine and B is sulphur.

3. A method comprising curing a composition of claim 1 or claim 2, using radiation, to form a cured composition.

4. An article or product comprising or consisting of a composition of claim 1 or claim 2 in cured state.

## Patentansprüche

1. Strahlenhärtbare Silikonzusammensetzung, die Folgendes umfasst:
(A) 100 Gewichtsteile eines kationisch polymerisierbaren Organopolysiloxans, das eine Epoxygruppe enthält und die durchschnittliche Zusammensetzungsformel (1) aufweist:
R¹ₐR²_{b}SiO_{(4-a-b)/2} (1)
worin R¹ eine substituierte oder unsubstituierte einwertige C₁-C₁₀-Kohlenwasserstoffgruppe ist, R² eine Epoxy enthaltende organische Gruppe ist, a und b Zahlen in folgendem Bereich sind: a > 0, b > 0 und 0 < a+b ≤ 3, und worin 1 bis 25 Mol-% aller organischer Gruppen in Komponente (A) einwertige, epoxyfunktionelle organische Gruppen sind,
(B) 0,05 bis 20 Gewichtsteile eines Fluoralkylfluorophosphorsäure-Salzes der allgemeinen Formel (2): 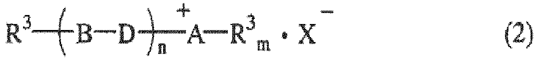
worin A ein m-wertiges Atom der Gruppe 16 oder 17 im Periodensystem ist,
B ein zweiwertiges Atom der Gruppe 16 im Periodensystem ist,
m = 1 oder 2 ist,
n eine ganze Zahl von 0 bis 3 ist,
die R³ jeweils unabhängig eine C₆-C₃₀-Arylgruppe, eine einwertige heterozyklische C₄-C₃₀-Gruppe oder eine C₁-C₃₀-Alkylgruppe sind, die gegebenenfalls zumindest einen Substituenten aufweisen, der aus der aus Alkyl, Hydroxy, Alkoxy, Alkylcarbonyl, Arylcarbonyl, Alkoxycarbonyl, Aryloxycarbonyl, Acyloxy, Arylthio, Alkylthio, Alkylsulfinyl, Alkylsulfonyl, Aryl, Aryloxy, Amino, Cyano, Nitro und Halogen bestehenden Gruppe ausgewählt ist, oder gegebenenfalls zumindest zwei R³ direkt oder über -O-, -S-, -SO-, -SO₂-, -NH-, -NR⁴-, -CO-, -COO-, -CONH-, C₁-C₃-Alkylen oder Phenylen mit A zu einer A enthaltenden Ringstruktur verbunden sind, R⁴ eine C₁-C₅-Alkylgruppe oder eine C₆-C₁₀-Arylgruppe ist,
D die allgemeine Formel (3) aufweist: 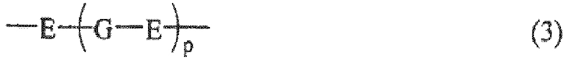 worin die E jeweils unabhängig eine C₁-C₈-Alkylengruppe, eine C₆-C₂₀-Arylengruppe oder eine zweiwertige heterozyklische C₈-C₂₀-Gruppe sind, die gegebenenfalls zumindest einen Substituenten aufweist, der aus der aus C₁-C₉-Alkyl, C₁-C₈-Alkoxy, C₆-C₁₀-Aryl, Hydroxy, Cyano, Nitro und Halogen bestehenden Gruppe ausgewählt ist, G unabhängig -O-, -S-, -SO-, -SO₂-, -NH-, -NR⁴-, -CO-, -COO-, -CONH-, C₁-C₃-Alkylen oder Phenylen ist, R⁴ wie zuvor definiert ist und p eine ganze Zahl von 0 bis 5 ist, und
X⁻, das ein Gegenanion zu dem Oniumion in Formel (2) ist, ein Fluoralkylfluorophosphat-Anion der allgemeinen Formel (4) ist:
[(Rf)_{q}PF_{6-q}]⁻ (4)
worin Rf unabhängig eine C₁-C₈-Alkylgruppe ist, in der zumindest 80 Mol-% der Wasserstoffatome durch Fluoratome ersetzt sind, q eine ganze Zahl von 1 bis 5 ist, wobei die Anzahl q an Resten Rf gleich oder unterschiedlich sein kann.

2. Zusammensetzung nach Anspruch 1, wobei die Komponente (B) ein Fluoralkylfluorophosphorsäure-Salz der Formel (2) ist, worin A Schwefel oder Iod ist und B Schwefel ist.

3. Verfahren, umfassend das Härten einer Zusammensetzung nach Anspruch 1 oder Anspruch 2 unter Verwendung von Strahlung, um eine gehärtete Zusammensetzung zu bilden.

4. Gegenstand oder Erzeugnis, der/das eine Zusammensetzung nach Anspruch 1 oder Anspruch 2 in gehärtetem Zustand umfasst oder daraus besteht.

## Revendications

1. Composition siliconée durcissable par irradiation comprenant
(A) 100 parties en poids d'un organopolysiloxane polymérisable par polymérisation cationique, contenant un groupe époxy et ayant la formule de composition moyenne (1) :
R¹ₐR²_{b}SiO_{(4-a-b)/2} (1)
dans laquelle R² est un groupe hydrocarboné en C₁ à C₁₀ monovalent substitué ou non substitué, R² est un groupe organique époxydé, a et b sont des nombres situés dans les plages : a > 0, b > 0, et 0 < a+b ≤ 3, et dans laquelle 1 à 25 % en moles des groupes organiques totaux dans le composant (A) sont des groupes organiques à fonctionnalité époxy monovalents,
(B) 0,05 à 20 parties en poids d'un sel d'acide fluoroalkylfluorophosphorique de formule générale (2) : 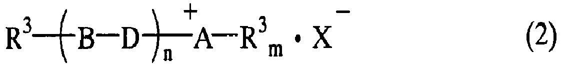
dans laquelle A est un atome de valence m du Groupe 16 ou 17 du Tableau Périodique,
B est un atome divalent du Groupe 16 du Tableau Périodique,
m vaut 1 ou 2,
n est un entier de 0 à 3,
chaque R³ est indépendamment un groupe aryle en C₆ à C₃₀, un groupe hétérocyclique monovalent en C₄ à C₃₀, ou un groupe alkyle en C₁ à C₃₀, qui peut porter au moins un substituant choisi dans l'ensemble constitué par alkyle, hydroxy, alcoxy, alkylcarbonyle, arylcarbonyle, alcoxycarbonyle, aryloxycarbonyle, acyloxy, arylthio, alkylthio, alkylsulfinyle, alkylsulfonyle, aryle, aryloxy, amino, cyano, nitro, et les halogènes, ou bien au moins deux R³ peuvent être liés à A directement ou via -O-, -S-, -SO-, -SO₂-, -NH-, -NR⁴-, -CO-,-COO-, -CONH-, alkylène en C₁ à C₃, ou phénylène, pour former une structure cyclique contenant A, R⁴ est un groupe alkyle en C₁ à C₅ ou un groupe aryle en C₆ à C₁₀, D est de formule générale (3) : 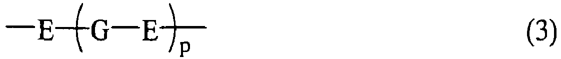 dans laquelle chaque E est indépendamment un groupe alkylène en C₁ à C₈, un groupe arylène en C₆ à C₂₀, ou un groupe hétérocyclique en C₈ à C₂₀ divalent, qui peut porter au moins un substituant choisi dans l'ensemble constitué par alkyle en C₁ à C₈, alcoxy en C₁ à C₈, aryle en C₆ à C₁₀, hydroxy, cyano, nitro, et les halogènes, G est indépendamment -O-, -S-, -SO-, -SO₂-, - NH-, -NR⁴-, -CO-, -COO-, -CONH-, alkylène en C₁ à C₃ ou phénylène, R⁴ est tel que défini ci-dessus, et p est un entier de 0 à 5, et
X⁻, qui est un contre-anion de l'ion onium dans la formule (2), est un anion fluoroalkylfluorophosphate de formule générale (4)
[(Rf)_{q}PF_{6-q}]⁻ (4)
dans laquelle Rf est indépendamment un groupe alkyle en C₁ à C₈ dans lequel au moins 80 % en moles des atomes d'hydrogène sont remplacés par des atomes de fluor, q est un entier de 1 à 5, le nombre q de Rf peut être identique ou différent.

2. Composition selon la revendication 1, dans lequel le composant (B) est un sel d'acide fluoroalkylfluorophosphorique de formule (2) et dans lequel A est le soufre ou l'iode et B est le soufre.

3. Procédé comprenant le durcissement d'une composition selon la revendication 1 ou la revendication 2, utilisant un rayonnement, pour former une composition durcie.

4. Article ou produit comprenant ou consistant en une composition selon la revendication 1 ou la revendication 2 à l'état durci.
